Europäisches Patentamt

European Patent Office

Office européen des brevets

(11) Veröffentlichungsnummer: **0 177 642**
A1

# EUROPÄISCHE PATENTANMELDUNG

(21) Anmeldenummer: **84115533.6**

(22) Anmeldetag: **15.12.84**

(51) Int. Cl.⁴: **F 16 J 15/36,** F 16 J 15/34,
F 16 J 15/52, F 04 D 29/08

(30) Priorität: **06.10.84 DE 3436715**

(43) Veröffentlichungstag der Anmeldung: **16.04.86**
**Patentblatt 86/16**

(84) Benannte Vertragsstaaten: **DE FR GB IT NL SE**

(71) Anmelder: **GOETZE AG,**
**Bürgermeister-Schmidt-Strasse 17,**
**D-5093 Burscheid 1 (DE)**

(72) Erfinder: **vom Stein, Karl, Am Sportfeld 15,**
**D-5093 Burscheid (DE)**
Erfinder: **Vossieck, Paul, Dürscheid 4, D-5093 Burscheid**
**(DE)**

(54) **Gleitringdichtung.**

(57) Gleitringdichtung, bestehend aus einem Gleitring (1), eine, mit diesem verbundenen Balgen (2), der im Bereich seines freien Endes (3, 4) in ein Haftteil ausläuft sowie zwei radial ineinanderliegenden Federn (5, 6), die gleiche Wikkelrichtung aufweisen und in unterschiedlichen radialen Ebenen mit dem Gleitring (1) zusammenwirken. Die Federn (5, 6) sind zumindest im Bereich ihrer freien axialen Enden (3, 4) zylindrisch gewickelt und in diesem Bereich durch Ineinanderschraubung ihrer Windungen (7, 8, 9) miteinander verbunden.

EP 0 177 642 A1

- 1 -

<u>Gleitringdichtung.</u>

Die Erfindung betrifft eine Gleitringdichtung zum Abdichten von insbesondere unter Druck stehenden Medien, bestehend aus einem Gleitring, einem Balgen, dessen eines axiales Ende mit dem Gleitring verbunden und dessen anderes axiales Ende als Haftteil ausgebildet ist sowie zwei radial ineinanderliegenden mit dem Gleitring zusammenwirkenden, sich axial abstützenden Druckfedern.

Durch das deutsche Gebrauchsmuster 1 789 821 sowie die US-PS 3 014 742 sind Gleitringdichtungen bekannt, bei denen der Gleitring durch zwei mit entgegengerichtetem Wicklungssinn hergestellte, radial ineinanderliegende kegelförmigen Federn an seine Gegenlauffläche gepreßt wird, wobei die Federn mit ihren freien Windungsenden die Welle oder eine auf dieser befestigte Hülse umschließen. Das Federende der radial innenliegenden Feder stützt sich hierbei axial an dem Federende der sie umgebenden Kegelfeder ab. Ferner ist durch die US-PS 2 445 207 eine Gleitringdichtung der angesprochenen Gattung bekannt, bestehend aus Gleitring, Balgen und zwei zylindrisch verlaufenden Druckfedern, die radial ineinanderliegen.

Bei axial kurzbauenden Gleitringdichtungen ist es - besonders in größeren Wellendurchmesserbereichen - oftmals schwierig, eine Feder mit der erforderlichen Kraftäußerung mit einer möglichst flach verlaufenden Federkennlinie konstruktiv zu verwirklichen. Tellerfeder, Tellerformfedern oder gewellte Flachfedern sind zwar kurzbauend,

- 2 -

besitzen jedoch eine relativ steil verlaufende Federkennlinie. Außerdem wirkt bei diesen Federarten die mit der
Wegänderung verbundene Durchmesseränderung in Gleitringdichtungen störend.

Ausgehend von der US-PS 2 445 207 liegt der Erfindung die
Aufgabe zugrunde, eine montagefreundliche, einfach herzustellende Gleitringdichtung zu konzipieren, bei der die
Federkraft in Abhängigkeit vom Anwendungsfall in weiten
Grenzen variiert werden kann.

Diese Aufgabe wird durch die Kombination folgender Merkmale gelöst:

a) die Federn weisen gleiche Wickelrichtung auf
b) die Federn sind zumindest im Bereich ihrer gemeinsamen
   axialen Abstützung zylindrisch gewickelt
c) die Federn sind in diesem zylindrisch gewickelten
   Bereich durch Ineinanderschraubung ihrer Windungen
   miteinander verbunden.

Bei Anwendung von zwei ineinandergeschachtelten parallel
wirkenden Federn addieren sich die Federkräfte. Bezogen
auf den Dichtungs- bzw. Wellendurchmesser sind deshalb
die erforderlichen Drahtdurchmesser klein, was sich
wiederum günstig im Sinne eines geringen Dichtungsaußendurchmessers auswirkt. Die Federwege sind größer als bei
Tellerfedern oder gewellten Flachfedern. Durch die Verbindung (Verschraubung) der freien Federenden ist es möglich, bei einer Balgenkonstruktion die Federn in einem
Arbeitsgang in den Balgen einzubringen, ohne daß Axial-

- 3 -

verschiebungen der Federn gegeneinander auftreten können.
Um den Verschraubungsvorgang mit geringstem Kraftaufwand
durchführen zu können, wird vorgeschlagen, daß beide Federn zumindest im Bereich ihrer Verbindungsstelle mit
gleicher Steigung gewickelt sind.

Einem weiteren Gedanken der Erfindung gemäß weisen die
zylindrisch verlaufenden Windungen der beiden Federn in
etwa gleiche Wickeldurchmesser auf, so daß sich zumindest
im Bereich der axialen Abstützung ein verhältnismäßig
geringer Dichtungsaußendurchmesser einstellt.

Alternativ dazu besteht jedoch auch die Möglichkeit, daß
die zylindrisch verlaufenden Windungen dergestalt unterschiedliche Wickeldurchmesser aufweisen, daß sie nach Art
einer Schraube-Mutter-Verbindung miteinander verbindbar
sind.

Vorzugsweise ist die eine Feder axial außerhalb der Verbindungsstelle zylindrisch und die sie konzentrisch umgebende andere Feder konisch ausgebildet, wobei der konische Wickelbereich auf einen anderen Durchmesser wieder
in einen zylindrischen Bereich übergeht, der dann mit dem
Gleitring zusammenwirkt. Im Einbauzustand liegen beide
Federn in unterschiedlichen radialen Ebenen mit vorzugsweise unterschiedlicher axialer Baulänge an einem winkelförmigen Gleitring an.

Durch Ausnutzung und Kombination der unterschiedlichen
linearen und progressiven Federkennungen zwischen einer
zylindrischen Druckfeder mit stetiger Steigung und einer

- 4 -

konisch gewickelten Druckfeder kann im Arbeitspunkt der
Gleitringdichtung die Gesamtkraftäußerung konstruktiv in
weiten Grenzen variiert werden. Vorzugsweise wird der
Endbereich der Zylinderfeder in die konische Druckfeder
hineingeschraubt.

Einem weiteren Gedanken der Erfindung gemäß umgibt der
Balgen den Verbindungsbereich der beiden Federenden zumindest teilweise und bildet so - im Gegensatz zum Stand
der Technik - die axiale Abstützung. Mindestens einer der
zylindrischen Endbreiche der Federn drückt das ihn umgebende Balgenende im Einbauzustand mit radialer Vorspannung an das abzudichtende Maschinenteil an.

Ebenfalls denkbar ist, daß beide ineinandergeschraubte
Endbereiche eine Radialkraftkomponente auf den Balgen
ausüben.

Die Erfindung ist in der Zeichnung dargestellt und wird
im folgenden näher beschrieben. Es zeigen:

Figur 1 Gleitringdichtung mit Doppelfeder
Figur 2 Teilansicht des Verbindungsbereiches der
beiden Federenden.

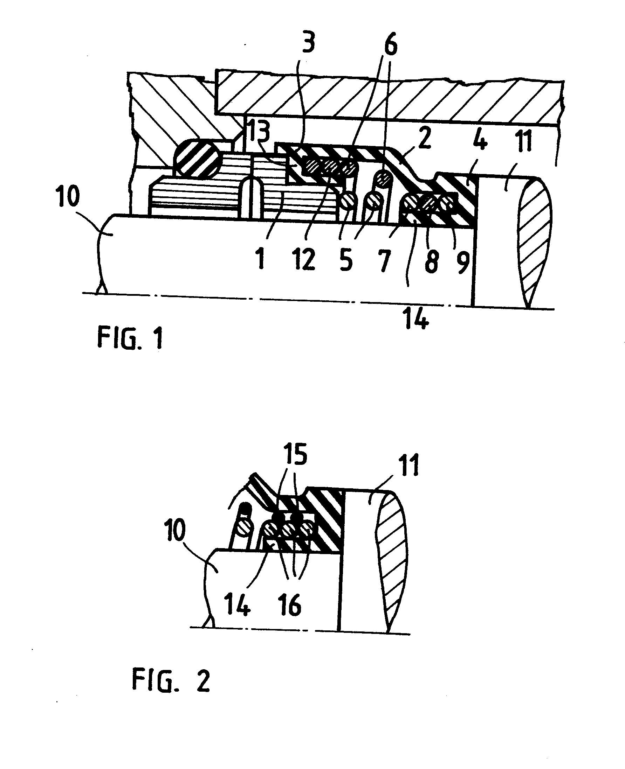

Figur 1 zeigt eine Gleitringdichtung, die aus folgenden
Teilen besteht: einen Gleitring 1, einen Balgen 2, dessen
eines axiales Ende 3 mit dem Gleitring 1 verbunden und
dessen anderes axiales Ende 4 als Haftteil ausgebildet
ist sowie zwei radial ineinanderliegenden, sich zwischen
dem Haftteil 4 und dem Gleitring 1 erstreckenden Druck-

federn 5,6. Erfindungsgemäß weisen beide Druckfedern 5,6 gleiche Wickelrichtung auf und sind zumindest im Bereich des Haftteiles 4 durch Ineinanderschraubung der Windungen 7,8,9 miteinander verbunden. Die Windungen 7,8,9 weisen im Bereich des Haftteiles 4 einen gleichen Wickeldurchmesser auf, so daß hier ein verhältnismäßig kleiner Dichtungsaußendurchmesser gebildet ist. Je nach Anwendungsfall kann es auch sinnvoll sein, mehrere Windungen als die im Beispiel angegebenen ineinanderzuschrauben, um so die Steifigkeit in diesem Bereich zu erhöhen. Die Gleitringdichtung ist auf eine Welle 10 aufgezogen und stützt sich axial an einem Wellenansatz 11 ab. Vorzugsweise sind zumindest die Windungen 7,8,9 mit gleicher Steigung gewickelt, damit sie sich ohne größeren Kraftaufwand ineinanderschrauben lassen. Die radial innenliegende Feder 5 ist zylindrisch gewickelt, während die radial äußere Feder 6 axial außerhalb des Haftteiles 4 konisch ansteigend ausgebildet ist, wobei der konische Wickelbereich auf einen größeren Wickeldurchmesser wieder in einen zylindrischen Wickelbereich 12 übergeht, der mit dem Gleitring 1 beziehungsweise dem diesen haltenden Balgenende 13 zusammenwirkt. Im Bereich des Haftteiles 4 werden die Federwindungen 7,8,9 von dem Balgenende 14 zumindest teilweise umschlossen. Um eine gute reibschlüssige Verbindung zwischen Welle 10 und Balgenende 14 sicherzustellen, üben die Windungen 7,8,9 eine Radialkraftkomponente auf das Balgenende 14 und somit auf die Welle 10 aus. Die Federn 5,6 sind mit unterschiedlicher axialer Wickellänge ausgeführt und wirken in unterschiedlichen radialen Ebene mit dem winkelförmigen Gleitring 1

zusammen. Durch Ausnutzung und Kombination der unterschiedlichen linearen (Zylinderfeder 5) und progressiven (Kegelfeder 6) Federkennungen kann im Arbeitspunkt der Gleitringdichtung die Gesamtkraftäußerung infolge Parallelschaltung der beiden Federn 5,6 konstruktiv in weiten Grenzen variiert werden.

Figur 2 ist im wesentlichen identisch mit Figur 1 mit dem Unterschied, daß die Federenden 15,16 im Bereich des Haftteiles unterschiedliche Wickeldurchmesser aufweisen und nach Art einer Schraube-Mutter-Verbindung miteinander verbunden sind, wobei die Federenden 15 dergestalt ausgelegt sind, daß eine Radialkraftkomponente auf das Balgenende 14 und somit die Welle 10 ausgeübt wird.

- 1 -

Patentansprüche:

1. Gleitringdichtung zur Abdichtung von insbesondere unter Druck stehenden Medien, bestehend aus einem Gleitring, einem Balgen, dessen eines axiales Ende mit dem Gleitring verbunden und dessen anderes axiales Ende als Haftteil ausgebildet ist sowie zwei radial ineinanderliegenden mit dem Gleitring zusammenwirkenden, sich axial abstützenden Druckfedern, dadurch gekennzeichnet, daß die Federn (5,6) gleiche Wickelrichtung aufweisen, im Bereich ihrer axialen Abstützung (4) zylindrisch gewickelt und in diesem Bereich durch Ineinanderschraubung der Windungen (7,8,9,15,16) miteinander verbunden sind.

2. Gleitringdichtung nach Anspruch 1, dadurch gekennzeichnet, daß beide Federn (5,6) zumindest im Bereich ihrer Verbindungsstelle (4) mit gleicher Steigung gewickelt sind.

3. Gleitringdichtung nach den Ansprüchen 1 und 2, dadurch gekennzeichnet, daß die zylindrisch verlaufenden Windungen (7,8,9) der beiden Federn (5,6) in etwa gleiche Wickeldurchmesser aufweisen.

4. Gleitringdichtung nach den Ansprüchen 1 und 2, dadurch gekennzeichnet, daß die zylindrisch verlaufenden Windungen (15,16) dergestalt unterschiedliche Wickeldurchmesser aufweisen, daß sie nach Art einer Schraube-Mutter-Verbindung miteinander verbindbar sind.

5. Gleitringdichtung nach den Ansprüchen 1 bis 4, dadurch gekennzeichnet, daß die eine Feder (5) axial außerhalb des Verbindungsbereiches (4) zylindrisch und die sie umgebende andere Feder (6) konisch ausgebildet ist.

6. Gleitringdichtung nach den Ansprüchen 1 bis 5, dadurch gekennzeichnet, daß der konische Wickelbereich in einen zylindrischen Bereich (12) übergeht, der mit dem Gleitring (1) zusammenwirkt.

7. Gleitringdichtung nach den Ansprüchen 1 bis 6, dadurch gekennzeichnet, daß der Balgen (2) den Verbindungsbereich (4) der beiden Federenden (7,8,9,15,16) zumindest teilweise umgibt (14).

8. Gleitringdichtung nach den Ansprüchen 1 bis 7, dadurch gekennzeichnet, daß zumindest einer der zylindrischen Endbereiche (7,9 oder 8; 15 oder 16) der Federn (5,6) das ihn umgebende Balgenende (14) im Einbauzustand mit radialer Vorspannung an das abzudichtende Maschinenteil (10) andrückt.

9.  Gleitringdichtung nach den Ansprüchen 1 bis 8, dadurch gekennzeichnet, daß beide Endbereiche (7,8,9 und 15,16) der ineinandergeschraubten Federn mit radialer Vorspannung auf das sie umgebende Balgenende (14) einwirken.

FIG. 1

FIG. 2

## EINSCHLÄGIGE DOKUMENTE

EP 84115533.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE - A1 - 3 222 759 (GOETZE AG)   * Gesamt *   -- | 1,6,7,8 | F 16 J 15/36 F 16 J 15/34 F 16 J 15/52 F 04 D 29/08 |
| A | DE - A1 - 3 243 633 (GOETZE AG)   * Gesamt *   -- | 1,6,7,8 | |
| A | EP - A1 - 0 100 398 (GOETZE AG)   * Fig. 2 *   -- | 1,5,6 | |
| A | DE - A1 - 3 326 052 (GOETZE AG)   * Gesamt *   -- | 1,5 | |
| D,A | US - A - 3 014 742 (E. MAYER)   * Gesamt *   ---- | 1,4 | |

**RECHERCHIERTE SACHGEBIETE (Int. Cl.4)**

F 16 J 15/00
F 04 D 29/00

Der vorliegende Recherchenbericht wurde für alle Patentansprüche erstellt.

| Recherchenort | Abschlußdatum der Recherche | Prüfer |
|---|---|---|
| WIEN | 23-12-1985 | SCHUGANICH |